# EUROPEAN PATENT SPECIFICATION

(11) **EP 0 672 563 B1**
(45) Date of publication and mention of the grant of the patent: **29.07.1998**
(21) Application number: 95301548.4
(22) Date of filing: 09.03.1995
(51) Int. Cl.: B60R 21/26

(54) **End base assembly for vehicle airbag module**
Endplattenanordnung für ein Fahrzeugluftsackmodul
Montage de plaque d'extrémité pour module de sac gonflable de véhicule

(30) Priority: 14.03.1994 US 213176; 15.06.1994 US 259852
(43) Date of publication of application: 20.09.1995
(73) Proprietor: AUTOLIV ASP, INC. (an Indiana corp.), Ogden, Utah 84405 (US)
(72) Inventor: Lauritzen, Donald R., Hyrum, Utah 84319 (US); Rose, Larry D., Layton, Utah 84040 (US)
(74) Representative: Bankes, Stephen Charles Digby

(56) References cited:
- EP-A- 0 496 267
- EP-A- 0 552 706
- GB-A- 2 268 714
- US-A- 4 865 635

## Description

This invention relates to the field of automotive airbag modules. More particularly, it relates to an improved filter pack and base construction for passenger side airbag modules.

The passenger side airbag module assembly for a motor vehicle normally includes a trough-shaped reaction canister which holds the folded airbag and is installed behind the dash board. An inflator housing is associated with the reaction canister and encloses a gas generant normally contained, in turn, within a cylindrical filter pack. The filter pack is a steel mesh material retained within the inflator housing by a base or bases. These bases are normally installed by welding, or swaging the inflator housing around their ends. Upon the occurence of a collision of sufficient magnitude, the generator is ignited and gases from the burning charge pass through openings in the inflator housing to inflate the airbag.

Airbag modules constructed in accordance with the prior art have certain deficiencies which it would be desirable to overcome. Many of these deficiencies relate to the end bases which close the inflator housing. Conventionally, these bases require a seal between the base and the filter pack and diameters that fit tight in the inflator housing for centering. These filter packs in turn require a sizing operation to control their diameter tolerance for installation in the inflator housing.

Another problem arises where seals between the bases and filter pack are used. There is a tendency for the seal to off-gas causing flaming subsequent to airbag actuation.

A further problem arises from the need for an auto ignition charge within the inflator. The purpose of this charge is to set off the main gas generant causing the inflator to function early, in the event of a warehouse or vehicle fire, at a temperature where the inflator housing and reaction canister still retain their structural integrity. This requires good heat transfer to the auto ignition charge and good access of the ignited auto ignition charge to the inflator igniter. To that effect, it would be desirable to improve the heat transfer characteristics from the outer wall to the auto ignition charge.

One prior art inflator for a motor vehicle airbag module (on which the pre-characterising part of claim 1 is based) is described in EP-A-0552706. This inflator includes a cylindrical housing with a ported sidewall surrounding a cylindrical filter in which gas generating material is situated. Each end of the housing is closed by an end base which bears directly against an end face of the filter and is held in place by inward notching of the housing sidewall into a circumferential groove in the end base.

Accordingly, it is a primary object of the present invention to provide an end base construction which is not orientation critical. Another object is to provide such a construction wherein sealing is improved without the need for O-rings. Another object is to provide such a construction wherein the ends of the filter pack are removed from the gas path. Another object is to provide such a construction wherein the beat transmission characteristics from the outer wall of the inflator housing to the internally housed auto ignition charge is improved. Other objects, features and advantages will become apparent from the following description and appended claims.

Thus according to the invention there is provided an inflator for a motor vehicle passenger-side airbag module which comprises:
a substantially cylindrical inflator housing having first and second ends and a ported sidewall for venting inflating gas to an airbag;
a generant assembly within said inflator housing including a substantially cylindrical filter having first and second ends and enclosing a gas generant therein;
a first end base and a second end base each being substantially cup-shaped and having a substantially circular main body closing a respective end of said inflator housing and a substantially cylindrical outer wall enclosed within the sidewall of said inflator housing, each of said first and second end bases being free of positive restraints against rotational movement about the longitudinal axis of said cylindrical filter; and
means for compressing each of said first and second end bases against a respective end of said cylindrical filter; characterised in that
the outer wall of each of said first and second end bases is in the form of an annular wedge surrounding and having a press-fit engagement with the respective first or second end of said filter; and in that
sealing means comprising a sheet gasket are provided for sealing each junction between one said outer wall and said inflator housing.

A cylindrical inner wall preferably extends from the main body parallel to the outer wall. A preload member is preferably positioned between the inner wall of the base and the gas generant.

One end base preferably includes means for retaining an initiator. Means are preferably provided for compressing a sheet gasket against each of the end bases to seal the ends of the inflator housing.

The invention will now be described by way of example only with reference to the accompanying drawings in which:
FIG. 1 is an elevational view in partial cross-section off an igniter end base in accordance with the present invention;
FIG. 2 is an elevational view, also in partial cross-section, off an inflator housing enclosing a filter pack assembly in accordance with the present invention; and
FIG. 3 is an exploded isometric view illustrating the assembly of an inflator in accordance with the present invention.

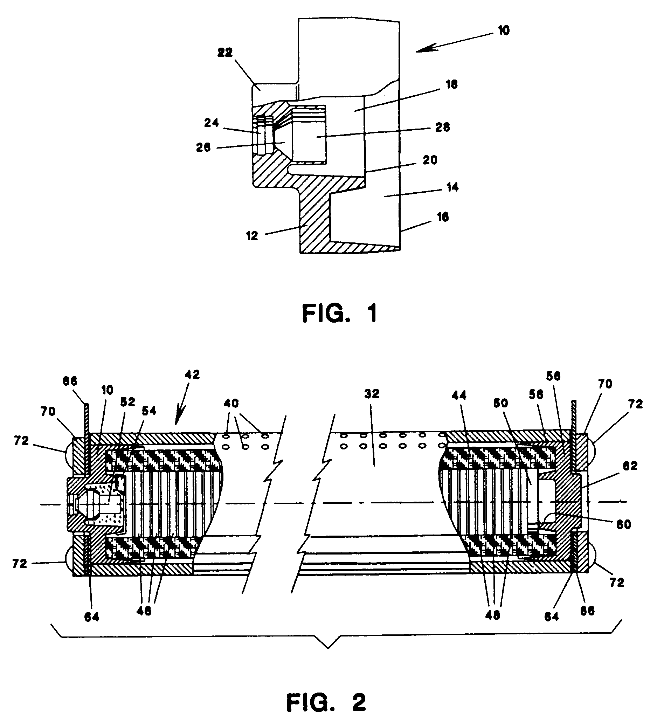

FIG. 1 illustrates an initiator end base 10 in accordance with the present invention. It is made from a material off good heat conductivity such as, for example, aluminum. It is basically cup-shaped and includes a circular main body 12 surrounded by a wall 14 which has the form off an annular wedge and tapers to a narrow rim 16. Extending from the body 12 and concentric with outer wall 14 is a shorter inner wall 18 which tapers to a relatively thicker rim 20. A cylindrical boss 22 protrudes from the opposite side of the body 12 and defines a multi-diametered cylindrical opening 24 terminating in a conical seat 26 surrounded by a relatively thin cylindrical retainer 28.

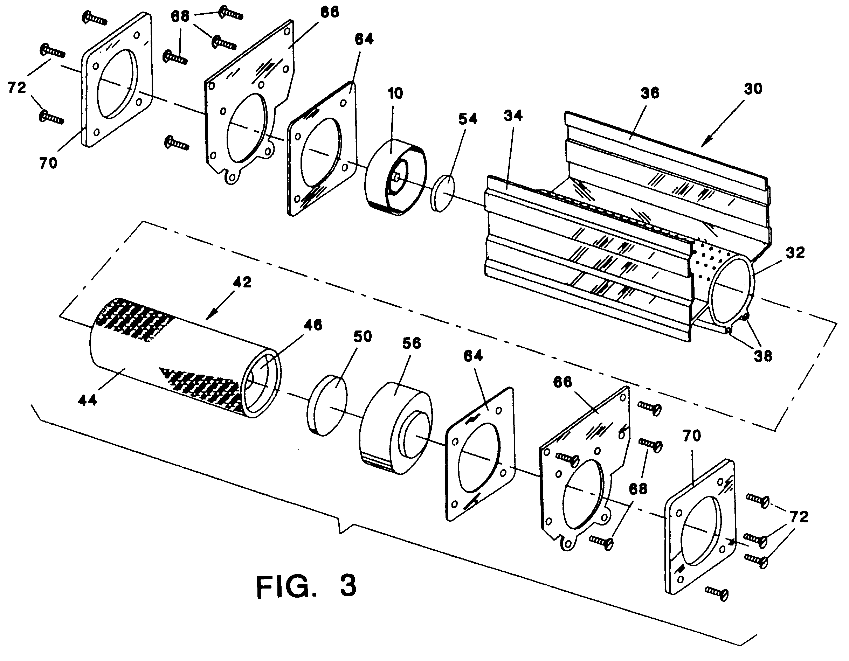

The various features of the invention will be best understood and appreciated by reference to FIGS. 2 and 3. FIG. 3 illustrates a combined reaction canister 30 and ignition chamber 32. The reaction canister 30 includes sidewalls 34, 36 which form a trough for containing a folded airbag. The canister and ignition chamber may be extruded from, for example, aluminum, and may include such features as screw retention channels 38, only two of which are illustrated. One wall of the ignition chamber 32 also forms the floor of the reaction canister 30 and is provided with openings 40 (FIG. 2) which emit inflating gas into the airbag.

The inflating gas is generated from a filter pack 42. Filter pack 42 comprises a cylindrical mesh screen 44 which contains the gas generant. The generant may take any of a number of forms. The one illustrated comprises a stack of pyrotechnic washer-like disks 46 separated by screen washers 48 which provide gas paths to the openings 40. One end of the filter pack 42 includes a preload 50. The preload 50 may be of any desired type such as a silicone wafer used in the prior art or, preferably, it may be of the type disclosed in U.S. Patent Application Serial No. 08/212258 filed April 14, 1994 by D.R. Lauritzen and J.L. Ralston titled Generant Preload and Tolerance Takeup Assembly and assigned to the applicant of the present application. The disclosure of that application is incorporated herein by reference.

A conventional initiator 52 is mounted in the conical seat 26 of the initiator end base 10 and the retainer 28 is crimped upon it as illustrated in FIG. 2 to hold it in place. The cavity between the initiator 52 and the inner wall 18 receives the auto ignition charge which is held in place by a cup-shaped screen 54. The assembled initiator end base 10 is press fitted onto the end of the filter pack 42. The tapered outer wall 14 centers and compresses the end of the mesh screen 44 and the rim 20 of inner wall 18 presses against the generant charge. Because the filter pack 42 and the initiator end base 10 are both circular and symmetrical, their rotational relationship is unimportant.

The opposite end of the filter pack 42 is closed by an end base 56. As will be seen in FIG. 2, the end base 56 is very similar to the initiator end base 10 but does not include means for retaining an initiator. It does, however, include a similar outer wall 58 and inner wall 60 and a raised boss 62 on its outer surface. The end base 56 is mounted on the end of the filter pack 42 in a similar fashion as the initiator end base 10 and similarly centers and compresses the mesh screen 44. It will also be noted that the inner wall 60 bears against and compresses the preload 50 to maintain the pyrotechnic disks 46 under compression.

The filter pack 42 assembly including the end bases 10 and 56 is inserted within the ignition chamber 32 and a flat gasket 64 is applied to each end. An end plate 66 is secured to each end of the reaction canister 30 by means of screws 68, thereby completing the trough of the reaction canister. Finally, retaining plates 70 are mounted to the assembly by means of screws 72 which extend into screw retention channels (not illustrated) formed in the reaction canister.

It will now be apparent that the construction described above has fully met all the objectives of this invention. The round bases can be easily manufactured with only minor machining required and they require no orientation relative to the filter pack. They may be press fitted onto the ends of the filter pack, and the outer walls become end seals which keep the ends of the filter pack out of the gas path. The flat faces on the end bases permit use of a flat gasket rather than an O-ring, which improves the sealing. Furthermore, there is a substantial area of engagement between the outer wall 14 of the initiator end base 10 with the inner surface of the wall of the ignition chamber 32. As a result, the heat transfer path from the outer wall of the canister 30 to the auto ignition charge is greatly enhanced.

## Claims

1. An inflator for a motor vehicle passenger-side airbag module which comprises:
a substantially cylindrical inflator housing (32) having first and second ends and a ported sidewall for venting inflating gas to an airbag;
a generant assembly within said inflator housing (32) including a substantially cylindrical filter (44) having first and second ends and enclosing a gas generant (46) therein;
a first end base (56) and a second end base (10) each being substantially cup-shaped and having a substantially circular main body (12) closing a respective end of said inflator housing (32) and a substantially cylindrical outer wall (14) enclosed within the sidewall of said inflator housing (32), each of said first and second end bases (10, 56) being free of positive restraints against rotational movement about the longitudinal axis of said cylindrical filter (44); and
means for compressing each of said first and second end bases (10, 56) against a respective end of said cylindrical filter (44);
characterised in that
the outer wall (14) of each of said first and second end bases is in the form of an annular wedge surrounding and having a press-fit engagement with the respective first or second end of said filter; and in that
sealing means (64) comprising a sheet gasket are provided for sealing each junction between one said outer wall (14) and said inflator housing (32).

2. The inflator claimed in claim 1 wherein at least one end base (10, 56) includes a substantially cylindrical inner wall (18) extending from said main body (12) substantially parallel to said outer wall (14).

3. The inflator claimed in claim 1 or 2 including means (26, 28) for retaining an initiator (52) within one said end base (10).

4. The inflator claimed in claim 3 wherein said initiator retaining means includes a seat (26) formed in the body of said second end base (10).

5. The inflator claimed in claim 3 or 4 wherein said initiator retaining means includes a retainer wall (28) in the body of said second end base (10) crimpable over an initiator.

6. The inflator claimed in any preceding claim wherein an outer surface of each end base outer wall (14) tapers inwardly away from the associated main body (12).

7. The inflator claimed in any preceding claim including a pre-load member (50) intermediate and compressed between one said end base (56) and said gas generant (46).

8. The inflator claimed in any preceding claim including a temperature sensitive auto-ignition charge accommodated by one said end base (10).

9. A motor vehicle passenger-side airbag module comprising an inflator as claimed in any preceding claim and a trough-shaped reaction canister (30) which is integral with said inflator housing (32).

## Patentansprüche

1. Aufblasvorrichtung für einen Airbagmodul auf der Beifahrerseite eines Motorfahrzeuges mit
einem im wesentlichen zylindrischen Aufblasvorrichtungsgehäuse (32) mit ersten und zweiten Enden und einer mit Öffnungen versehenen Seitenwand zur Abgabe von Aufblasgas an einen Airbag,
einer Gaserzeugeranordnung in dem Aufblasvorrichtungsgehäuse (32) mit einem im wesentlichen zylindrischen Filter (44) mit ersten und zweiten Enden und einem darin eingeschlossenen Gaserzeuger (46),
einer ersten Endplatte (56) und einer zweiten Endplatte (10), die jeweils im wesentlichen becherförmig sind und einen im wesentlichen runden Hauptkörper (12), der jeweils ein Ende des Aufblasvorrichtungsgehäuses (32) verschließt, und eine im wesentlichen zylindrische Außenwand (14), die in der Seitenwand des Aufblasvorrichtungsgehäuses (32) eingeschlossen ist, haben, wobei jede der ersten und zweiten Endplatten (10, 56) frei von positiven Zwängen gegen Drehbewegung um die Längsachse des zylindrischen Filters (44) ist, und
Einrichtungen zum Zusammenpressen jeder der ersten und zweiten Endplatten (10, 56) gegen ein jeweiliges Ende des zylindrischen Filters (44),
**dadurch gekennzeichnet,** daß die Außenwand (14) jede der ersten und zweiten Endplatten in der Form eines ringförmigen Keils vorliegt, der das jeweilige erste oder zweite Ende des Filters umgibt und in Preßsitzeingriff mit ihm steht, und daß Dichtungseinrichtungen (64), die eine Plattendichtung umfassen, zum Abdichten einer jeden Verbindung zwischen der Außenwand (14) und dem Aufblasvorrichtungsgehäuse (32) vorgesehen sind.

2. Aufblasvorrichtung nach Anspruch 1, bei der wenigstens eine Endplatte (10, 56) eine im wesentlichen zylindrische Innenwand (18) aufweist, die sich von dem Hauptkörper (12) aus im wesentlichen parallel zu der Außenwand (14) erstreckt.

3. Aufblasvorrichtung nach Anspruch 1 oder 2 mit Einrichtungen (26, 28) zum Halten einer Zündkapsel (52) in einer der Endplatten (10).

4. Aufblasvorrichtung nach Anspruch 3, bei der die die Zündkapsel haltende Einrichtung einen Sitz (28) aufweist, der in dem Körper der zweiten Endplatte (10) ausgebildet ist.

5. Aufblasvorrichtung nach Anspruch 3 oder 4, bei der die die Zündkapsel haltende Einrichtung eine Haltewand (28) in dem Körper der zweiten Endplatte (10) enthält, die über eine Zündkapsel umfalzbar ist.

6. Aufblasvorrichtung nach einem der vorausgehenden Ansprüche, bei der sich eine Außenfläche jeder Endplattenaußenwand (14) von dem mit ihr verbundenen Hauptkörper (12) aus nach innen verjüngt.

7. Aufblasvorrichtung nach einem der vorausgehenden Ansprüche mit einem vorgespannten Teil (50) zwischen einer der Endplatten (56) und dem Gaserzeuger (46) und zwischen ihnen zusammengepreßt.

8. Aufblasvorrichtung nach einem der vorausgehenden Ansprüche mit einer temperaturempfindlichen Selbstzündungsladung, die von einer der Endplatten (10) aufgenommen wird.

9. Airbagmodul für die Beifahrerseite eines Motorfahrzeuges mit einer Aufblasvorrichtung nach einem der vorausgehenden Ansprüche und einem wannenförmigen Reaktionsgehäuse (30), welches aus einem Stück mit dem Aufblasvorrichtungsgehäuse (32) besteht.

## Revendications

1. Dispositif de gonflage pour un module de coussin gonflable du côté passager d'un véhicule à moteur, qui comporte :
un boîtier de dispositif de gonflage sensiblement cylindrique (32) ayant des première et deuxième extrémités et une paroi latérale à orifice afin de laisser s'échapper du gaz de gonflage vers un coussin gonflable ;
un ensemble de génération à l'intérieur dudit boîtier de dispositif de gonflage (32) comprenant un filtre sensiblement cylindrique (44) ayant des première et deuxième extrémités et enfermant un générateur de gaz (46);
une première base d'extrémité (56) et une deuxième base d'extrémité (10), chacune étant sensiblement en forme de coupe et ayant un corps principal sensiblement circulaire (12) qui ferme une extrémité respective dudit boîtier de dispositif de gonflage (32) et une paroi extérieure sensiblement cylindrique (14) enfermée dans la paroi latérale dudit boîtier de dispositif de gonflage (32), chacune desdites première et deuxième bases d'extrémité (10, 56) étant exempte de retenues positives à l'encontre d'un mouvement de rotation autour de l'axe longitudinal dudit filtre cylindrique (44) ; et
des moyens destinés à comprimer chacune desdites première et deuxième bases d'extrémité (10, 56) contre une extrémité respective dudit filtre cylindrique (44);
caractérisé en ce que
la paroi extérieure (14) de chacune desdites première et deuxième bases d'extrémité est sous la forme d'un coin annulaire entourant et ayant un engagement à ajustement serré avec la première ou deuxième extrémité respective dudit filtre ; et en ce que
des moyens d'étanchéité (64) comportant un joint d'étanchéité en feuille sont prévus afin d'assurer l'étanchéité de chaque jonction entre ladite paroi extérieure (44) et ledit boîtier de dispositif de gonflage (32).

2. Dispositif de gonflage selon la revendication 1, dans lequel au moins une base d'extrémité (10, 56) comprend une paroi intérieure sensiblement cylindrique (18) qui s'étend depuis ledit corps principal (12) sensiblement parallèlement à ladite paroi extérieure (14).

3. Dispositif de gonflage selon la revendication 1 ou 2, comprenant des moyens (26, 28) destinés à retenir une amorce (52) dans ladite base d'extrémité (10).

4. Dispositif de gonflage selon la revendication 3, dans lequel lesdits moyens de retenue d'amorce comprennent un siège (26) formé dans le corps de ladite deuxième base d'extrémité (10).

5. Dispositif de gonflage selon la revendication 3 ou 4, dans lequel lesdits moyens de retenue d'amorce comprennent une paroi de retenue (28) dans le corps de ladite deuxième base d'extrémité (10) qui peut être sertie sur une amorce.

6. Dispositif de gonflage selon l'une quelconque des revendications précédentes, dans lequel une surface extérieure de chaque paroi extérieure de base d'extrémité (14) converge à l'écart du corps principal associé (12).

7. Dispositif de gonflage selon l'une quelconque des revendications précédentes, comprenant un élément de précharge (50) entre et comprimé entre ladite base d'extrémité (56) et ledit générateur de gaz (46).

8. Dispositif de gonflage selon l'une quelconque des revendications précédentes, comprenant une charge à auto-allumage sensible à la température reçue par ladite base d'extrémité (10).

9. Module de coussin gonflable du côté passager d'un véhicule à moteur comportant un dispositif de gonflage selon l'une quelconque des revendications précédentes et un boîtier de réaction en forme de goulotte (30) qui fait partie intégrante dudit boîtier de gonflage (32).
